# DEMANDE DE BREVET EUROPEEN

(11) **EP 1 471 305 A1**
(43) Date de publication de la demande: **27.10.2004**
(21) Numéro de dépôt: 04290967.1
(22) Date de dépôt: 09.04.2004
(51) Int. Cl.: F21V 14/04, F21V 14/08

(54) **Module d'éclairage pour projecteur de véhicule**

(30) Priorité: 25.04.2003 FR 0305098
(71) Demandeur: VALEO VISION, 93012 Bobigny Cédex (FR)
(72) Inventeur: Albou, Pierre, 75013 Paris (FR); Dubosc, Christophe, 93250 Villemomble (FR); Leleve, Joel, 93800 Epinay sur Seine (FR); Tillet, Raphael, 75012 Paris (FR)

(57) **Abrégé**

La présente invention concerne un module d'éclairage pour projecteur de véhicule particulièrement adapté à une utilisation avec des diodes électroluminescentes. Le module 17 réalise un premier faisceau d'éclairage du type à coupure et un deuxième faisceau d'éclairage. Il comporte un premier réflecteur 2 comportant une surface sensiblement elliptique de réflexion des rayons lumineux et au moins une source lumineuse 5 agencée au voisinage du premier foyer F1 du premier réflecteur 2. Il comporte en outre un deuxième réflecteur 3 produisant le premier faisceau à coupure de sortie et dont le foyer est agencé au voisinage du second foyer F2 du premier réflecteur 2, un troisième réflecteur 4, dit plieuse, dont la face supérieure est réfléchissante, la plieuse se situant entre le premier réflecteur 2 et le deuxième réflecteur 3 et comportant un bord de coupure, agencé au voisinage du second foyer F2 du premier réflecteur 2 et un quatrième réflecteur mobile 13 prenant au moins deux positions : une première position passive, dans laquelle le quatrième réflecteur 13 n'intercepte pas les rayons lumineux à destination du deuxième réflecteur 3 et une deuxième position active dans laquelle le quatrième réflecteur 13 produit le deuxième faisceau d'éclairage en interceptant les rayons lumineux à destination du deuxième réflecteur 3, le foyer du quatrième réflecteur étant agencé au voisinage du foyer du deuxième réflecteur 3.

## Description

La présente invention concerne un module d'éclairage pour projecteur de véhicule particulièrement adapté à une utilisation avec des diodes électroluminescentes.

Certaines fonctions d'éclairage telles que les feux de jour ou feux de circulation diurne DRL (Daytime Running Light en anglais) sont aujourd'hui optionnelles dans un véhicule.

Dès lors, le caractère optionnel d'une telle fonction conduit les constructeurs à ne pas toujours la proposer dans la mesure où elle occupe une place importante dans un projecteur d'éclairage ; ce dernier doit en effet comporter un ou plusieurs modules d'éclairage dédiés à cette fonction.

En outre, chaque module destiné à la réalisation de la fonction inclut une source de lumière telle qu'une diode électroluminescente et induit ainsi un coût supplémentaire.

La présente invention vise à fournir un module d'éclairage pour projecteur de véhicule permettant de réaliser de façon simple et économique un faisceau d'éclairage tel qu'un faisceau pour feux de jour sans encombrement additionnel du projecteur.

La présente invention propose à cet effet un module d'éclairage pour projecteur de véhicule réalisant un premier faisceau d'éclairage du type à coupure comportant :
- un premier réflecteur comportant une surface sensiblement elliptique de réflexion des rayons lumineux,
- au moins une source lumineuse agencée au voisinage du premier foyer dudit premier réflecteur,
caractérisé en ce que ledit module réalise un deuxième faisceau d'éclairage, ledit module comportant :
- un deuxième réflecteur produisant le premier faisceau à coupure de sortie et dont le foyer est agencé au voisinage du second foyer dudit premier réflecteur,
- un troisième réflecteur, dit plieuse, dont la face supérieure est réfléchissante, ladite plieuse se situant entre ledit premier réflecteur et ledit deuxième réflecteur et comportant un bord, dit bord de coupure, agencé au voisinage du second foyer dudit premier réflecteur de manière à former la coupure dans le faisceau d'éclairage,
- un quatrième réflecteur mobile prenant au moins deux positions :
   o une première position, dite passive, dans laquelle ledit quatrième réflecteur n'intercepte pas les rayons lumineux à destination dudit deuxième réflecteur,
   o une deuxième position, dite active, dans laquelle ledit quatrième réflecteur produit ledit deuxième faisceau d'éclairage en interceptant les rayons lumineux à destination dudit deuxième réflecteur, le foyer dudit quatrième réflecteur étant agencé au voisinage du foyer dudit deuxième réflecteur.

Grâce à l'invention, deux fonctions correspondant aux deux faisceaux d'éclairage peuvent être réalisées à l'aide d'une même source de lumière telle qu'une diode électroluminescente. Le premier faisceau d'éclairage du type à coupure est par exemple le faisceau d'un feu anti-brouillard ou d'une fonction virage tandis que le deuxième faisceau d'éclairage est par exemple le faisceau d'un feu de circulation diurne. L'invention permet ainsi de partager une même source de lumière entre une fonction de jour (cas des feux diurnes) et une fonction de nuit (cas des feux anti-brouillards). Le module selon l'invention permet donc d'intégrer de façon simple et économique une deuxième fonction, par exemple optionnelle, à un module réalisant une première fonction à coupure, sans perte de place dans le projecteur.

Avantageusement, ledit deuxième faisceau d'éclairage est du type sans coupure.

De manière particulièrement avantageuse, ledit quatrième réflecteur comporte une surface de réflexion déposée sur une surface, dite porteuse, ladite surface porteuse étant de forme sensiblement paraboloïdale.

Avantageusement, ledit deuxième réflecteur comporte une surface sensiblement paraboloïdale de réflexion des rayons lumineux.

De manière très avantageuse, ladite source lumineuse est une diode électroluminescente.

Ainsi, on peut utiliser une diode émettant de la lumière blanche telle qu'une diode au nitrure de gallium GaN avec un phosphore.

Ce type de diode permet à la fois de servir de source pour une fonction à coupure telle que les feux anti-brouillards et pour une fonction sans coupure telle que les feux diurnes.

Avantageusement, ledit quatrième réflecteur comporte une pluralité de pavés déviateurs, chaque pavé comportant une zone réfléchissante.

De manière particulièrement avantageuse, chaque pavé est défini par une loi d'évolution de la déviation horizontale des rayons lumineux reçus en fonction d'une cote horizontale et par une loi d'évolution de la déviation verticale des rayons reçus en fonction d'une cote verticale.

Un tel agencement de pavés déviateurs permet de réaliser un deuxième faisceau pour feux de circulation diurne DRL.

De manière avantageuse, lesdits premier, deuxième et troisième réflecteur sont réalisés d'une seule pièce, ladite pièce comportant une ouverture, ledit quatrième réflecteur glissant à travers ladite ouverture en passant entre lesdites première et deuxième position.

Avantageusement, le mouvement dudit quatrième réflecteur entre lesdites première et deuxième position est un mouvement rotatif autour d'un axe de rotation.

Avantageusement, le module comporte des moyens motorisés pour déplacer ledit quatrième réflecteur entre lesdites première et deuxième position.

Selon un premier mode de réalisation, lesdits moyens motorisés pour déplacer ledit quatrième réflecteur entre lesdites première et deuxième position comportent deux bras solidairement mobiles autour d'un axe de rotation.

Avantageusement, lesdits deux bras mobiles se situent de part et d'autre dudit module.

Selon un deuxième mode de réalisation, lesdits moyens motorisés pour déplacer ledit quatrième réflecteur entre lesdites première et deuxième position comportent une roue dentée dont la rotation entraîne ledit quatrième réflecteur entre lesdites première et deuxième position, ledit quatrième réflecteur comportant une pluralité de dents sur sa face arrière et destinées à coopérer avec ladite roue dentée.

La présente invention a également pour objet un système d'éclairage réalisant au moins deux types de faisceau comportant une pluralité de modules selon l'une des revendications précédentes.

La présente invention a en outre pour objet un système d'éclairage réalisant au moins deux types de faisceau comportant au moins un premier module selon l'une des revendications précédentes produisant deux types de faisceau d'éclairage et au moins un deuxième module produisant un seul type de faisceau d'éclairage.

On peut ainsi utiliser la totalité des sources lumineuses pour réaliser le premier type de faisceau et moins de sources lumineuses pour réaliser le deuxième type de faisceau.

D'autres caractéristiques et avantages de la présente invention apparaîtront dans la description suivante de modes de réalisation de l'invention, donnés à titre illustratif et nullement limitatif.

Dans les figures suivantes :
- La figure 1 représente schématiquement une vue de côté d'un dispositif réalisant le faisceau à coupure dans un module d'éclairage selon l'invention illustrant le trajet des rayons lumineux,
- La figure 2 représente une vue en perspective d'un dispositif réalisant le faisceau à coupure dans un module d'éclairage selon l'invention,
- La figure 3 représente schématiquement une vue de côté d'un module d'éclairage selon l'invention illustrant une première position du réflecteur mobile du module,
- La figure 4 représente schématiquement une vue de côté d'un module d'éclairage selon l'invention illustrant une deuxième position du réflecteur mobile du module,
- La figure 5 représente un mode de réalisation d'un pavé déviateur utilisé dans le quatrième réflecteur du module d'éclairage selon l'invention,
- La figure 6 représente schématiquement une vue de face du quatrième réflecteur du module d'éclairage selon l'invention,
- La figure 7A représente schématiquement une vue partielle de côté d'un module d'éclairage selon un premier mode de réalisation de l'invention,
- La figure 7B représente schématiquement une vue de derrière du quatrième réflecteur tel que représenté en figure 7A,
- La figure 8A représente schématiquement une vue partielle de côté d'un module d'éclairage selon un deuxième mode de réalisation de l'invention,
- La figure 8B représente schématiquement une vue de face du quatrième réflecteur tel que représenté en figure 8A.

Dans toutes les figures, les éléments communs portent les mêmes numéros de référence.

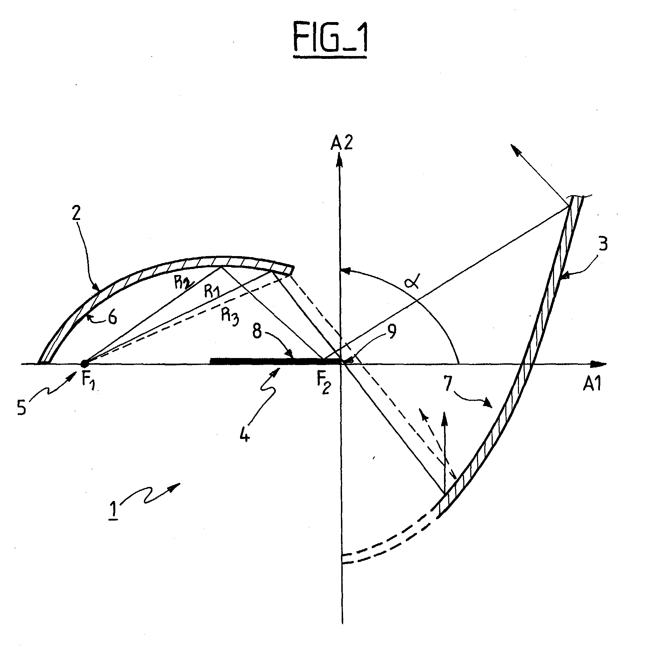

La figure 1 représente schématiquement une vue de coté une vue de côté d'un dispositif 1 réalisant le faisceau à coupure dans un module d'éclairage selon l'invention.

Le dispositif 1 comporte :
- un premier réflecteur 2,
- un deuxième réflecteur 3,
- un troisième réflecteur 4,
- une source lumineuse 5.

Le premier réflecteur 2 est un réflecteur du type elliptique possédant :
- deux foyers F1 et F2,
- un axe optique A1,
- une surface réfléchissante 6 sensiblement elliptique.

La surface sensiblement elliptique 6 est réalisée sous la forme d'un secteur angulaire de pièce sensiblement de révolution et qui s'étend dans le demi espace situé au-dessus d'un plan axial perpendiculaire au plan de la feuille et contenant l'axe optique A1. En première approximation, la surface 6 est une demi-ellipsoïde.

On peut cependant noter que la surface 6 peut ne pas être parfaitement elliptique et avoir plusieurs profils spécifiques prévus pour optimiser la répartition lumineuse dans le faisceau d'éclairage produit par le dispositif 1. Ceci implique que le premier réflecteur 2 ne soit pas parfaitement de révolution.

La source lumineuse 5 se trouve agencée sensiblement au premier foyer F1 du premier réflecteur 2.

Avantageusement, la source lumineuse 5 est une diode électroluminescente qui émet la majorité de son énergie lumineuse vers la face interne réfléchissante de la surface sensiblement elliptique 6.

Cette diode 5 est par exemple une diode réalisée en nitrure de gallium GaN avec un phosphore permettant d'émettre de la lumière blanche.

Le deuxième réflecteur 3 comporte :
- un foyer sensiblement confondu avec le second foyer F2 du premier réflecteur 2,
- un axe optique A2,
- une surface réfléchissante 7.

L'axe optique A2 est sensiblement parallèle à l'axe longitudinal d'un véhicule non représenté et équipé du dispositif d'éclairage 1.

L'axe optique A1 forme un angle α avec l'axe optique A2. L'angle α tel que représenté sur la figure 1 est égal à 90° mais nous verrons par la suite que cet angle peut prendre d'autres valeurs.

Selon un premier mode de réalisation, la surface réfléchissante 7 est de forme sensiblement paraboloïdale, l'axe de la parabole étant l'axe optique A2.

Le troisième réflecteur 4, encore appelé plieuse, se situe entre le premier réflecteur 2 et le deuxième réflecteur 3 et comporte au moins une face supérieure 8 réfléchissante et un bord d'extrémité avant 9, dit bord de coupure.

Le bord de coupure 9 est agencé au voisinage du second foyer F2 du premier réflecteur 2.

Le principe de fonctionnement du dispositif 1 est le suivant :

Nous considérerons pour cela trois rayons lumineux R1, R2 et R3 issus de la source lumineuse 5.

Comme la source lumineuse 5 est agencée au premier foyer F1 du premier réflecteur 2, la majeure partie des rayons émis par la source 5, après s'être réfléchie sur la face interne 6, est renvoyée vers le second foyer F2 ou au voisinage de celui-ci. C'est le cas du rayon R1 qui passe le long du bord de coupure 9. R1 se réfléchit ensuite sur la surface 7 du deuxième réflecteur 3 selon une direction sensiblement parallèle à l'axe optique A2 du deuxième réflecteur 3.

Cependant, d'autres rayons peuvent, après s'être réfléchi sur la face interne 6, se réfléchir sur la surface 8 de la plieuse 4 ; c'est le cas de R2. R2 va ensuite se réfléchir à nouveau sur la surface 7 paraboloïdale et cette réflexion se fera vers la gauche dans le plan de la figure 1. Le rayon R2 est donc émis sous la coupure dans le faisceau d'éclairage. Sans la réflexion de R2 sur la surface 8, le rayon R2 aurait été inacceptable (car au-dessus de la coupure).

D'autres rayons, du type de R3, peuvent passer au-dessus du bord 9. Dans un tel cas, le rayon R3 est également émis sous la coupure dans le faisceau d'éclairage.

La surface réfléchissante 8 permet de « replier » les images de la source lumineuse 5 qui sont réfléchies par la surface elliptique 6 du premier réflecteur 2 au second foyer F2.

Le « pli » formé par ce « repliement » d'images contribue à former une coupure nette dans le faisceau d'éclairage réfléchi par le deuxième réflecteur 3.

Notons que l'angle α est choisi et optimisé en utilisant la propriété des diodes de n'émettre que dans un demi-espace de sorte que le premier réflecteur 2 n'intercepte pas une partie du flux réfléchi par le deuxième réflecteur 3. L'angle α choisi pour illustrer l'invention est égal à 90° mais cet angle peut également être supérieur à 90° afin d'obtenir un dispositif plus compact tout en permettant au premier réflecteur 2 de ne pas intercepter une partie du flux réfléchi par le deuxième réflecteur 3.

En outre, nous avons considéré que le bord 9 était droit ; cette hypothèse revient à négliger la courbure de champ de la surface paraboloïdale 7.

Afin de compenser précisément les importantes aberrations de la parabole lorsqu'on d'éloigne de l'axe optique A2, on peut remplacer le bord droit tel que décrit en figure 1 par un bord ayant une forme complexe.

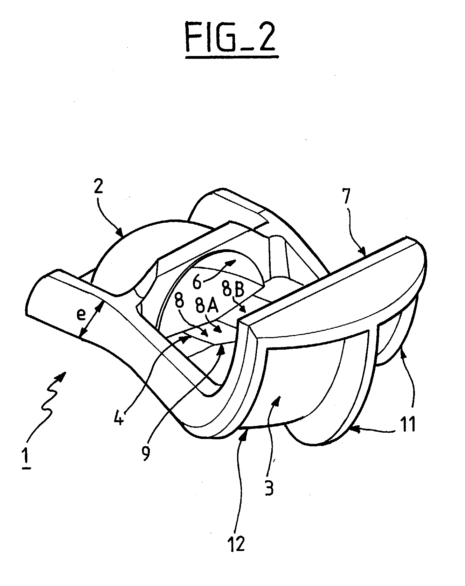

La figure 2 représente une vue en perspective d'un dispositif 1 réalisant le faisceau à coupure dans un module d'éclairage selon l'invention

Ce dispositif 1 est identique à celui représenté en figure 1 à la différence que l'angle α entre l'axe optique A2 du deuxième réflecteur 3 et l'axe optique A1 du premier réflecteur 2 est égal à environ 120° de façon à réaliser un dispositif compact tout en évitant que le premier réflecteur 2 n'intercepte une partie du flux réfléchi par le deuxième réflecteur.

Les trois réflecteurs 2, 3 et 4 ont été ici réalisés d'une seule pièce 1.

La faible épaisseur e de la pièce 1 permet d'injecter par moulage tous les réflecteurs en une seule fois dans un moule sans tiroir avec une pièce mince.

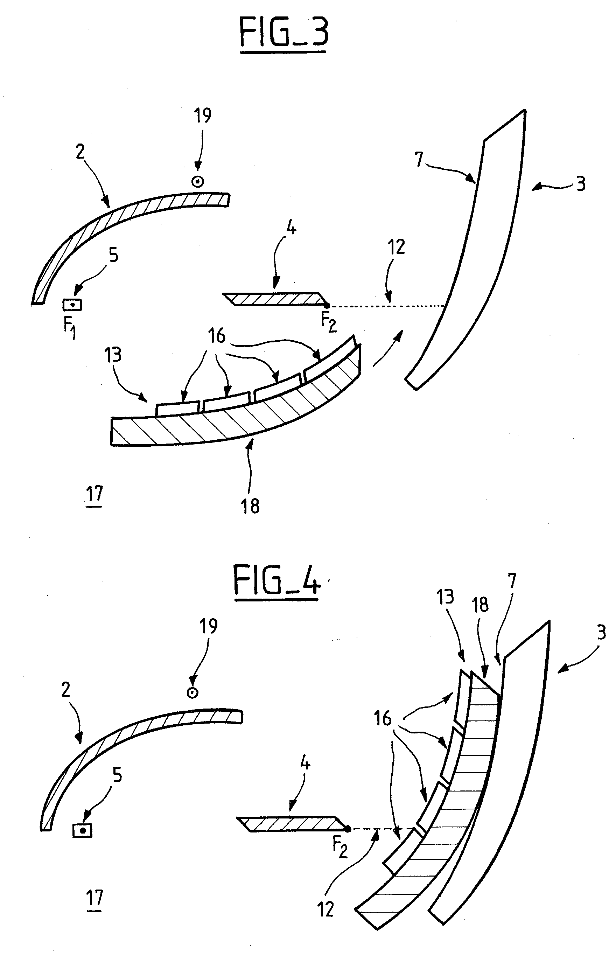

Ce dispositif 1 comporte une cavité 12 non visible sur la figure située sur la partie basse du dispositif 1 entre le deuxième réflecteur 3 et le troisième réflecteur 4. Le rôle de cette cavité 13 sera expliqué plus précisément en référence aux figures 3 et 4.

Le dispositif 1 comporte en outre des nervures 11. Notons que la surface réfléchissante du troisième réflecteur 4 comporte deux plans inclinés en V 8A et 8B de sorte que le bord de coupure 9 ait un profil suivant approximativement la ligne focale du deuxième réflecteur 3. Ce profil en V n'est qu'une approximation du lieu focal théorique mais d'autres profils courbes peuvent également être utilisés.

Le matériau utilisé peut être un matériau thermoplastique standard du type PPS (Polysulfure de phenylene) ou un matériau thermodurcissable, les parties réfléchissantes étant ensuite métallisées, par exemple par de l'aluminium.

Les figures 3 et 4 représentent schématiquement une vue de côté d'un module 17 d'éclairage selon l'invention.

Le module 17 d'éclairage comporte :
- un premier réflecteur 2,
- un deuxième réflecteur 3,
- un troisième réflecteur 4,
- une source lumineuse 5,
- une cavité 12 représentée en pointillé,
- un quatrième réflecteur 13.

Les éléments 2, 3, 4, et 5 sont identiques à ceux décrits en référence aux figures 1 et 2 et permettent de réaliser un premier faisceau d'éclairage du type à coupure.

Le foyer du quatrième réflecteur 13 est agencé au voisinage du foyer du deuxième réflecteur 3.

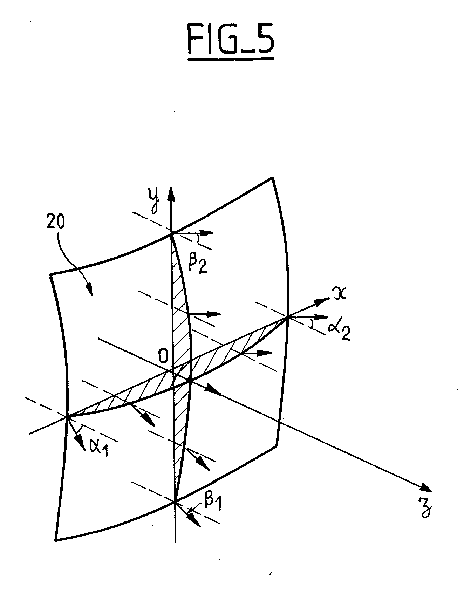

Le quatrième réflecteur 13 comporte :
- un élément porteur 18,
- une surface réfléchissante formée par une pluralité de pavés déviateurs 16 décrits plus précisément en référence à la figure 5.

Le quatrième réflecteur 13 est réalisé par exemple un matériau thermoplastique standard du type PPS (Polysulfure de phenylene), les parties réfléchissantes étant ensuite métallisées, par exemple par de l'aluminium.

La surface de l'élément porteur 8 recevant les pavés déviateurs 16 est de forme sensiblement paraboloïdale.

La figure 3 représente une première position, dite passive, dans laquelle le quatrième réflecteur 13 n'intercepte pas les rayons lumineux à destination de la surface 7 du deuxième réflecteur 3.

Dans cette position passive, le quatrième réflecteur se glisse via la cavité 12 sous le dispositif 1 tel que représenté en figures 1 et 2.

Ainsi, dans cette première position, le module d'éclairage 17 selon l'invention permet de réaliser un premier faisceau d'éclairage, du type à coupure, tel qu'un faisceau pour feux anti-brouillards.

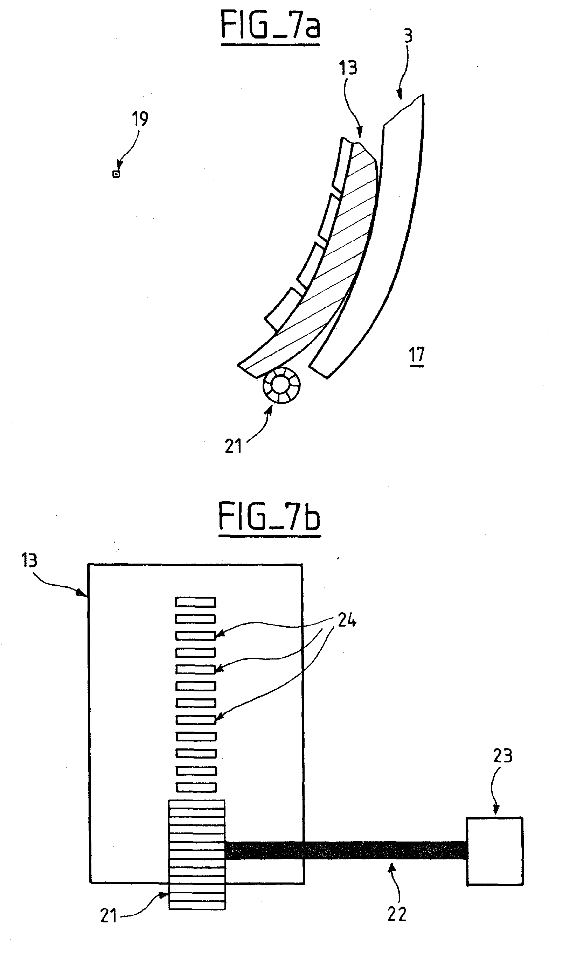

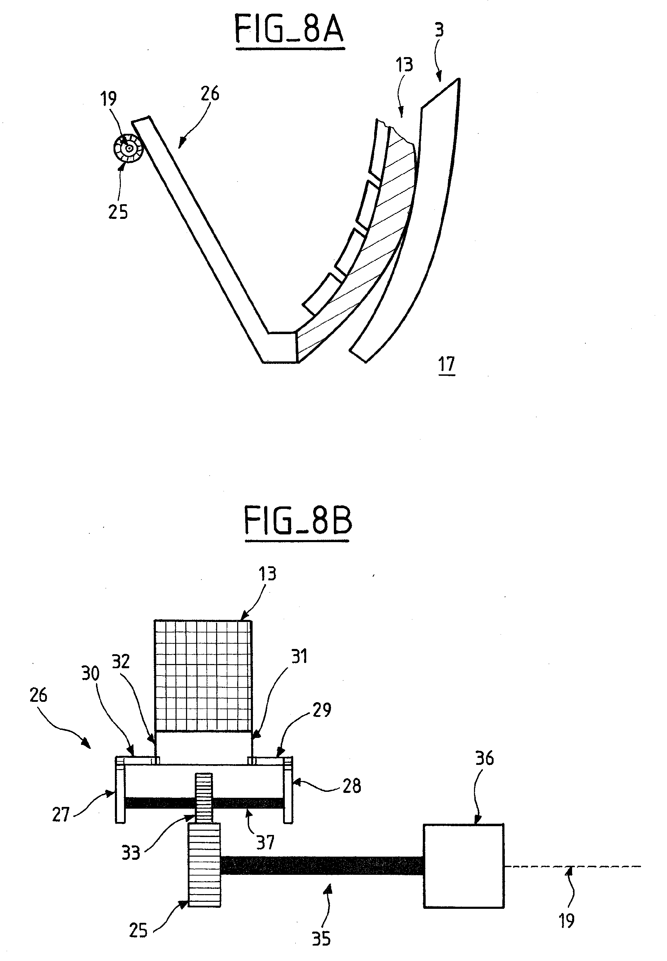

La figure 4 représente une deuxième position, dite active, dans laquelle le quatrième réflecteur 13 se trouve entre le troisième réflecteur 4 et le deuxième réflecteur 3. Le quatrième réflecteur 13 est ainsi en rotation autour d'un axe de rotation 19 pour passer progressivement d'une position à l'autre. Les moyens permettant au quatrième réflecteur de se mouvoir seront décrits plus précisément en référence aux figures 7 et 8.

Le quatrième réflecteur 13 passe de sa position de repli passive à la position active en passant à travers la cavité 12.

Dans cette position active, la surface de réflexion formée par les surfaces de réflexion des pavés 16 intercepte l'ensemble des rayons lumineux provenant du premier réflecteur 2 et du troisième réflecteur 4.

La surface de l'élément porteur 18 recevant la pluralité de pavés déviateurs 16 est sensiblement paraboloïdale avec un foyer situé au voisinage du second foyer F2 du premier réflecteur 2.

La surface de réflexion formée par les pavés déviateurs 16 permet ainsi de réaliser un deuxième faisceau d'éclairage.

La figure 5 représente un mode de réalisation de la surface réflectrice 20 d'un pavé déviateur 16 tel que représenté sur les figures 3 et 4.

On impose pour cette surface 20 une certaine position en profondeur suivant l'axe optique du feu, noté Oz. On impose également une fonction monotone continue de l'angle du rayon réfléchi, projeté dans un plan horizontal, en fonction de la cote du point de la surface 20 en direction horizontale perpendiculaire à l'axe noté Ox. Cette fonction est notée α=f(x). Enfin, on impose une fonction monotone continue de l'angle du rayon réfléchi, projeté dans un plan vertical, en fonction de la cote du point de la surface en direction verticale perpendiculaire à l'axe noté Oy. Cette fonction est notée β=g(y).

La position de la source de lumière étant connue, les équations de Descartes permettent d'obtenir une surface unique satisfaisant à ces diverses contraintes.

Ainsi, dans le sens de la largeur, la surface 20 assure une déviation horizontale variant progressivement, d'un bord à l'autre, entre une déviation α₁ et une déviation α₂ de sens opposé, en passant localement, au centre 0 de la surface 20, par une déviation de préférence nulle.

De même, dans le sens de la hauteur, la surface 20 assure une déviation verticale variant progressivement, d'un bord à l'autre, entre une déviation β₁ et une déviation β₂ de sens opposé, en passant localement, au centre 0 de la surface 20, par une déviation de préférence nulle.

Les angles α₁, α₂, β₁ et β₂ sont choisis en fonction de la largeur et de la hauteur d'un champ d'éclairement recherché.

On notera que la définition de la surface en terme de profils horizontal et vertical est une définition relative déterminée par rapport à un profil paraboloïdal ayant un foyer situé au voisinage du second foyer F2 du premier réflecteur et qui a pour propriété de ne donner aucune déviation, en quel que point que ce soit. En d'autres termes, de manière pratique, la construction des pavés déviateurs se fait en partant d'une surface paraboloïdale, chacun des centres des surfaces réflectrices des pavés appartenant à cette surface paraboloïdale.

On notera également que la déviation du rayon réfléchi n'est rigoureusement celle prévue que lorsque le champ de normales correspond à une surface physiquement réalisable ; dans le cas le plus général, la déviation est respéctée avec certitude sur les bords ou le long des deux coupes représentées en figure 5.

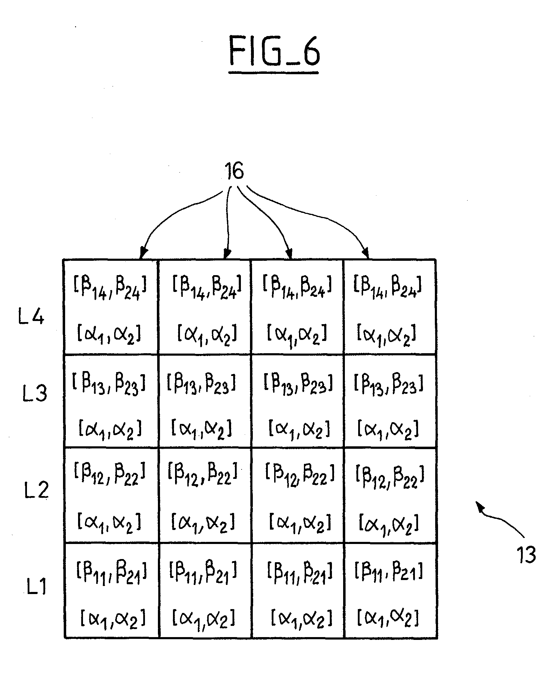

La figure 6 représente schématiquement une vue de face de la partie réflectrice du quatrième réflecteur 13 tel que représenté aux figures 3 et 4 et permettant de réaliser un deuxième faisceau d'éclairage d'un feu de circulation diurne DRL.

Le quatrième réflecteur 13 comporte quatre lignes L1 à L4 comportant chacune quatre pavés déviateurs 16.

Chaque pavé appartenant une même ligne Li (i variant de 1 à 4) possède la même fenêtre de déviations verticales [β₁ᵢ, [β₂ᵢ].

Ainsi, de bas en haut (c'est à dire de L1 à L4), on a les fenêtres de déviations verticales suivantes : [0, +12°], [0, +12°], [-7°, +12°], [-10°, +12°].

Tous les pavés possèdent la même fenêtre de déviations horizontale [α₁, α₂] égale à [-18°, 18°].

De la sorte, les pavés du bas renvoient la lumière essentiellement vers le haut, afin d'éviter la plieuse. La dissymétrie entre les angles négatifs et positifs en faveur de ces derniers (d'ailleurs renforcée en pratique par le contrôle fin des déviations le long d'une arête verticale) compense le caractère dissymétrique de la source secondaire créée au second foyer F2 du premier réflecteur par la plieuse (la zone de luminance la plus élevée est au foyer mais la source ne s'étend qu'au dessus de la plieuse).

Dans le cas d'un premier faisceau à coupure de sortie réalisant une fonction virage, c'est à dire une fonction permettant d'éclairer, lorsqu'un véhicule se déplace sur une trajectoire incurvée, les portions de routes qui sont destinées à être abordées par le véhicule et qui se trouvent à l'avant et sur le coté de celui-ci, on peut utiliser un dispositif identique à celui représenté sur les figures 3 et 4 et dont l'axe optique A2 tel que représenté en figure 1 n'est plus parallèle à l'axe longitudinal du véhicule mais forme un angle non nul (environ 20°) avec ledit axe du véhicule.

Dans ce cas, le quatrième réflecteur mobile doit compenser cet angle non nul ; pour cela, le quatrième réflecteur peut être du type réflecteur de Fresnel en bandes verticales ; ledit quatrième réflecteur comporte alors des pavés déviateurs tels que décrits plus haut, avec toutefois un changement de convexité en coupe horizontale de façon à éviter au mieux les occulations entre pavés.

La figure 7A représente schématiquement une vue partielle de côté d'un module d'éclairage 17 selon un premier mode de réalisation de l'invention ; par soucis de clarté, seul le deuxième réflecteur 3 et le quatrième réflecteur 13 du module 17 sont représentés.

Le module 17 comporte en outre un engrenage 21.

La figure 7B représente la face arrière du quatrième réflecteur ; cette face arrière comporte une pluralité de dents 24 qui viennent s'engrener sur l'engrenage 21 fixé sur une tige 22 suivant l'axe d'un moteur 23.

Le moteur 23 est par exemple un moteur à courant continu avec limitation de courant par une carte électronique permettant le maintien du couple bloqué et une limitation de l'élévation de température.

La mise en rotation de la tige 22 par le moteur 23 entraîne le mouvement du quatrième réflecteur 13 qui peut ainsi passer de sa position passive à sa position active, et réciproquement, suivant un mouvement de rotation autour de l'axe 19.

Notons que l'on peut également prévoir un guidage latéral du quatrième réflecteur 13 ; ce dernier peut ainsi comporter des pions issus de ses côtés coulissant dans des glissières réalisées dans les parois liant les différents réflecteurs du dispositif 1 tel que représenté en figure 2.

La figure 8A représente schématiquement une vue partielle de côté d'un module d'éclairage 17 selon un deuxième mode de réalisation de l'invention ; à nouveau, par soucis de clarté, seul le deuxième réflecteur 3 et le quatrième réflecteur 13 du module 17 sont représentés.

Le module 17 comporte en outre un dispositif de maintien 26 maintenant le réflecteur 13 à son extrémité basse.

Le dispositif de maintien 26 est en rotation autour de l'axe 19 et permet ainsi la rotation du quatrième réflecteur 13 autour de l'axe 19 entre ses deux positions active et passive. Le dispositif de maintien 26 est entraîné en rotation par la rotation d'un premier engrenage 25.

Le dispositif de maintien 26 sera mieux compris en référence à la figure 8B qui représente en vue de face le quatrième réflecteur 13.

Le dispositif de maintien 26 comporte :
- deux premiers bras parallèles 31 et 32,
- deux deuxièmes bras parallèles 29 et 30,
- deux troisièmes bras parallèles 27 et 28,
- un deuxième engrenage 33,
- une tige 37.

Les premiers bras 31 et 32 maintiennent le réflecteur 13 sur la partie inférieure de ses bords latéraux.

Les deux deuxièmes bras 29 et 30 sont perpendiculaires aux deux premiers bras 31 et 32, le premier bras 32 étant fixé au deuxième bras 30 et le premier bras 31 étant fixé au deuxième bras 29.

Les troisièmes bras 27 et 28 sont parallèles aux premiers bras 31 et 32 et présentent un écartement plus grand que l'écartement des premiers bras 31 et 32.

Le troisième bras 27 est fixé au deuxième bras 30 et le troisième bras 28 est fixé au deuxième bras 29.

L'ensemble formé par les premiers, deuxièmes et troisièmes bras est solidaire de la tige 37 comportant en son centre le deuxième engrenage 33.

Le deuxième engrenage 33 est engrené sur le premier engrenage 25 fixé sur une tige 35 suivant l'axe d'un moteur 36. L'axe du moteur est confondu avec l'axe de rotation 19.

La mise en rotation de la tige 35 par le moteur 36 entraîne le mouvement du quatrième réflecteur 13 qui peut ainsi passer de sa position passive à sa position active et réciproquement suivant un mouvement de rotation autour de l'axe 19.

Notons que le diamètre du deuxième engrenage 33 est inférieur au diamètre du premier engrenage 25 ; on peut de la sorte utiliser un moteur fournissant une vitesse de rotation à la tige 35 plus élevée que la vitesse de rotation nécessaire pour le mouvement du quatrième réflecteur 13.

L'écartement réglable des troisièmes bras 27 et 28 permet de placer le dispostif de maintien 26 à différents endroits tel qu'au-dessus du premier réflecteur 2 représenté sur les figures 1 à 4. Les troisièmes bras 27 et 28 sont alors de part et d'autres du premier réflecteur de sorte que le dispositif de maintien 26 perturbe le moins possible le trajet des rayons lumineux.

Bien entendu, l'invention n'est pas limitée aux modes de réalisation qui viennent d'être décrit.

Ainsi, on peut par exemple prolonger le quatrième réflecteur mobile ; on peut de la sorte réaliser une troisième fonction correspondant à une troisième position du réflecteur.

De même, l'invention a été plus particulièrement décrite pour la réalisation d'un premier faisceau à coupure du type anti-brouillard ou feux de virage mais l'invention peut être utilisée pour tout type de faisceau à coupure.

De plus, on peut commander la puissance de la diode utilisée comme source lumineuse par hachage du courant afin d'adapter la puissance de la diode en fonction des faisceaux désirés tout en gardant le même courant nominal instantané dans la diode.

En outre, le module selon l'invention peut comporter des moyens de commutation automatique permettant de commander les moyens motorisés pour déplacer ledit quatrième réflecteur entre lesdites première et deuxième position selon que l'on est dans la journée ou dans la nuit.

## Revendications

1. Module (17) d'éclairage pour projecteur de véhicule réalisant un premier faisceau d'éclairage du type à coupure comportant :
- un premier réflecteur (2) comportant une surface sensiblement elliptique (6) de réflexion des rayons lumineux,
- au moins une source lumineuse (5) agencée au voisinage du premier foyer (F1) dudit premier réflecteur,
**caractérisé en ce que** ledit module (17) réalise un deuxième faisceau d'éclairage, ledit module comportant :
- un deuxième réflecteur (3) produisant le premier faisceau à coupure de sortie et dont le foyer est agencé au voisinage du second foyer (F2) dudit premier réflecteur,
- un troisième réflecteur (4), dit plieuse, dont la face supérieure (8) est réfléchissante, ladite plieuse se situant entre ledit premier réflecteur (2) et ledit deuxième réflecteur (3) et comportant un bord (9), dit bord de coupure, agencé au voisinage du second foyer (F2) dudit premier réflecteur (2) de manière à former la coupure dans le faisceau d'éclairage,
- un quatrième réflecteur mobile (13) prenant au moins deux positions :
o une première position, dite passive, dans laquelle ledit quatrième réflecteur (13) n'intercepte pas les rayons lumineux à destination dudit deuxième réflecteur (3),
o une deuxième position, dite active, dans laquelle ledit quatrième réflecteur (13) produit ledit deuxième faisceau d'éclairage en interceptant les rayons lumineux à destination dudit deuxième réflecteur (3), le foyer dudit quatrième réflecteur étant agencé au voisinage du foyer dudit deuxième réflecteur (3).

2. Module (17) selon la revendication précédente **caractérisé en ce que** ledit deuxième faisceau d'éclairage est du type sans coupure.

3. Module (17) selon l'une des revendications précédentes **caractérisé en ce que** ledit quatrième réflecteur (13) comporte une surface de réflexion déposée sur une surface, dite porteuse, ladite surface porteuse étant de forme sensiblement paraboloïdale.

4. Module (17) selon l'une des revendications précédentes **caractérisé en ce que** ledit deuxième réflecteur (3) comporte une surface (7) sensiblement paraboloïdale de réflexion des rayons lumineux.

5. Module (17) selon l'une des revendications précédentes **caractérisé en ce que** ladite source lumineuse (5) est une diode électroluminescente.

6. Module (17) selon l'une des revendications précédentes **caractérisé en ce que** ledit quatrième réflecteur (13) comporte une pluralité de pavés déviateurs (16), chaque pavé comportant une zone réfléchissante (20).

7. Module (17) selon la revendication précédente **caractérisé en ce que** ladite zone réfléchissante (20) de chaque pavé est définie par une loi d'évolution de la déviation horizontale des rayons lumineux reçus en fonction d'une cote horizontale et par une loi d'évolution de la déviation verticale des rayons reçus en fonction d'une cote verticale.

8. Module (17) selon l'une des revendications précédentes **caractérisé en ce que** lesdits premier, deuxième et troisième réflecteur sont réalisés d'une seule pièce (1), ladite pièce (1) comportant une ouverture (12), ledit quatrième réflecteur (13) glissant à travers ladite ouverture (12) en passant entre lesdites première et deuxième position.

9. Module (17) selon l'une des revendications précédentes **caractérisé en ce que** le mouvement dudit quatrième réflecteur entre lesdites première et deuxième position est un mouvement rotatif autour d'un axe de rotation (19).

10. Module (17) selon l'une des revendications précédentes **caractérisé en ce qu'**il comporte des moyens motorisés pour déplacer ledit quatrième réflecteur entre lesdites première et deuxième position.

11. Module (17) selon la revendication précédente **caractérisé en ce que** lesdits moyens (26) motorisés pour déplacer ledit quatrième réflecteur entre lesdites première et deuxième position comportent deux bras (27, 28) solidairement mobiles autour d'un axe (19) de rotation.

12. Module (17) selon la revendication précédente **caractérisé en ce que** lesdits deux bras mobiles (27, 28) se situent de part et d'autre dudit module (17).

13. Module (17) selon la revendication 10 **caractérisé en ce que** lesdits moyens motorisés pour déplacer ledit quatrième réflecteur entre lesdites première et deuxième position comportent une roue dentée (21) dont la rotation entraîne ledit quatrième réflecteur (13) entre lesdites première et deuxième position, ledit quatrième réflecteur (13) comportant une pluralité de dents (24) sur sa face arrière destinées à coopérer avec ladite roue dentée (21).

14. Système d'éclairage réalisant au moins deux types de faisceau comportant une pluralité de modules selon l'une des revendications précédentes.

15. Système d'éclairage réalisant au moins deux types de faisceau comportant au moins un premier module selon l'une des revendications 1 à 13 produisant deux types de faisceau d'éclairage et au moins un deuxième module produisant un seul type de faisceau d'éclairage.
